# EUROPÄISCHE PATENTANMELDUNG

(11) **EP 2 730 364 A1**
(43) Veröffentlichungstag der Anmeldung: **14.05.2014**
(21) Anmeldenummer: 12191770.2
(22) Anmeldetag: 08.11.2012
(51) Int. Cl.: B23K 26/34, F01D 5/00

(54) **Schweißbadsicherung am Randbereich**

(71) Anmelder: Siemens Aktiengesellschaft, 80333 München (DE)
(72) Erfinder: Burbaum, Bernd, 14612 Falkensee (DE)

(57) **Zusammenfassung**

Durch den Auftrag einer Umlaufschweißung (13) vor dem Abtrag von Material wird eine vergrößerte Fläche für die nachfolgende Auftragsschweißung erzeugt.

## Beschreibung

Die Erfindung betrifft das Vorbereiten einer zu schweißenden Fläche durch eine Schweißbadsicherung am Randbereich.

Für einen erfolgreichen, gleichmäßigen Aufbau einer Anstreifkante und des Tips ist eine exakte Positionierung (< 50 µm) beim Schweißen auf der Kante (Rahmenkontur) erforderlich. Beim Laserschweißen beträgt die Spurbreite ca. 600 µm. Wird die Kante nicht genau positioniert, wird ein in Aufbaurichtung, wellenförmiger Aufbau erzielt, der zur Erstarrung von Körnern mit kritischer Korngröße (> 300 µm) und zur Rissbildung führt. Aufgrund der Anlagentechnologie kann diese kleine Positioniergenauigkeit nicht immer erzielt werden.

Es ist daher Aufgabe der Erfindung oben genanntes Problem zu lösen.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Es zeigen:
- Figur 1 - 4: Schritte des erfindungsgemäßen Verfahrens,
- Figur 5: eine Turbinenschaufel,
- Figur 6: eine Liste von Superlegierungen.

Die Figuren und die Beschreibung stellen nur Ausführungsbeispiele der Erfindung dar.

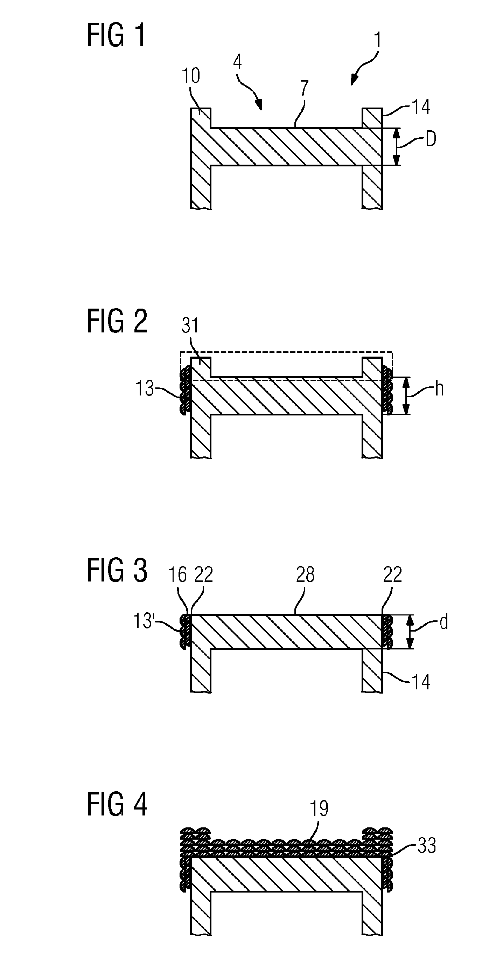

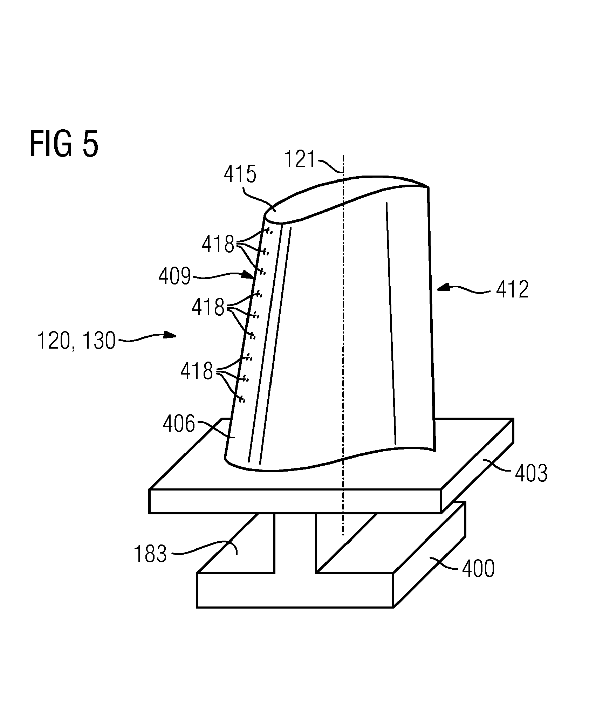

Die Figur 1 zeigt eine Spitze 4 eines Bauteils 1, 120, 130 (Fig. 5) mit einer äußeren Wand 10 und einem Boden 7 dazwischen.

Der Boden 7 weist eine gewisse Dicke D auf, sofern das Bauteil 1, 120, 130 hohl ist.

Die äußere Wand 10 muss repariert werden, da sie im Einsatz korrodiert und/oder erodiert und/oder abgeschliffen ist.

Nach dem Stand der Technik wird die Wand 10 einfach abgetragen und eine Auftragsschweißung erfolgt.

Erfindungsgemäß wird vor dem Abtrennen der Wand 10 oder Abtrag von Material 31 (hier gestrichelt angedeutet) eine Schweißung 13 auf eine Seitenfläche 14 des Bauteils 1 aufgebracht. Die Schweißung 13 beginnt höchstens, insbesondere zumindest auf der Höhe des Bodens 7 und erstreckt sich ab der Höhe des Bodens 7 über eine gewisse Tiefe h, die in diesem Ausführungsbeispiel mit einer Dicke D des Bodens 7 nicht größer sein muss als die Dicke D.

Im nächsten Schritt wird in einem Bereich 31 Material, insbesondere die Wand 10 abgetragen, wobei dies vorzugsweise durch eine frästechnische Bearbeitung geschieht, um eine äußere Fläche 28 zu erzeugen, auf der das Material 19 aufgetragen werden soll.

Der Abtrag kann auch durch einen Laser und in derselben Bearbeitungsvorrichtung erfolgen.

Durch diese Abtragung wird die äußere Wand 10 und/oder ein Teil des Bodens 7 abgetragen, so dass hier in diesem Fall der Boden 7 noch eine Dicke d ≤D aufweist.

Es ergibt sich die äußere Fläche 28, die an ihrem Kantenbereich 22 bzw. an Kanten 22 durch die teilweise abgeschnittene Schweißung 13 verlängert ist, indem die Schweißung 13' über die Kante 22 hinaus eine nahezu planare Fläche 16 aufweist.

Dann erfolgt der Wiederaufbau der Spitze 4 durch bekannte Aufbauverfahren, insbesondere durch Laserauftragsschweißen. Durch die Fläche 16, die einen Überhang darstellt, können Schweißungen im Randbereich 22 über den Randbereich 22 hinaus erfolgen, ohne dass es zu Herabsinken von Schweißmaterial in den Randbereich 22 erfolgt. So befindet sich dann zumindest eine Schweißraupe 33 auf der äußeren Fläche 28 des Bauteils 1, 120, 130 und dem Teil der Schweißung 13', ohne dass sie 33 absinkt. Dann wird der Boden 7 wieder verstärkt und zumindest die äußere Wand 10 wird neu aufgebaut.

Die Schweißung 13 muss notwendigerweise nur dort vorhanden sein, wo Material im Kantenbereich 22 abgetragen und aufgetragen wird. Die kann also auch umlaufend sein.

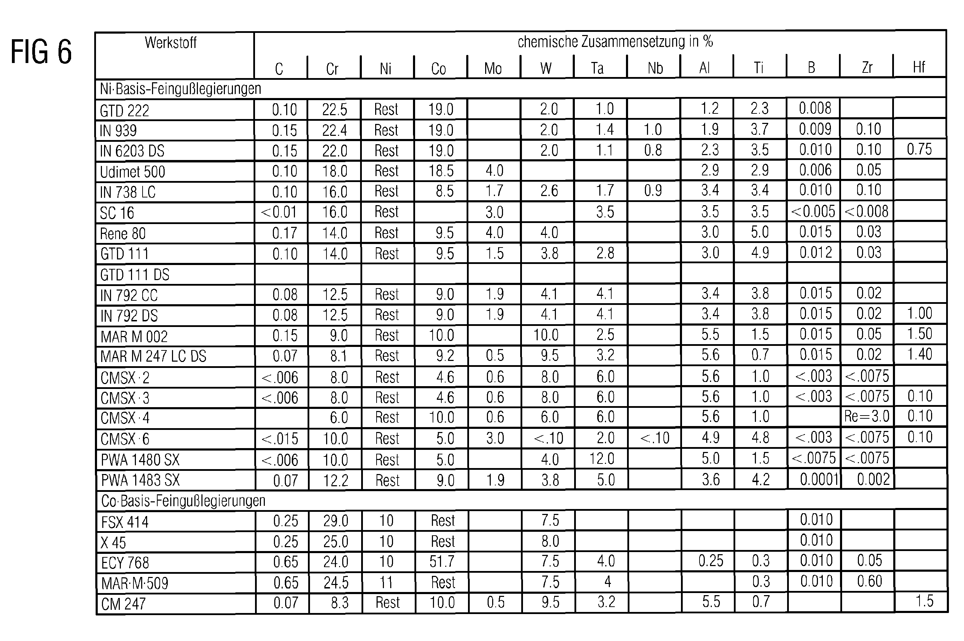

Vorzugsweise ist das Bauteil 1 eine Turbinenschaufel 120, 130, die als Material eine nickel- oder kobaltbasierte Superlegierung, insbesondere gemäß Figur 6 aufweist.

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0, 6Y-0, 7Si oder Co-28Ni-24Cr-10Al-0, 6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0, 4Y-2Re oder Ni-25Co-17Cr-10Al-0, 4Y-1, 5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zum Auftragsschweißen auf eine äußere Fläche (28) mit einem Kantenbereich (22) eines Bauteils (1, 120, 130),
an die (28) eine Seitenfläche (14) angrenzt,
bei dem zuerst Material (31) zur Erzeugung der äußeren Fläche (28) abgetragen wird,
aber vor dem Abtragen des Materials (31) eine insbesondere umlaufende Schweißung (13) auf der Seitenfläche (14) so erfolgt,
dass nach dem Abtragen vom Material (31) auf der Höhe der Fläche (28) des Bauteils (1, 120, 130) noch ein Teil (13') der insbesondere umlaufenden Schweißung (13) auf der Seitenfläche (14) vorhanden ist,
wobei der Teil (13') der insbesondere umlaufenden Schweißung (13) durch ihre freistehende Fläche (16) die zu schweißende äußere Fläche (28) des Bauteils (1, 120, 130) über den Kantenbereich (22) der Fläche (28) hinaus verlängert
und dann Material (19) auf die Fläche (28, 16) aufgetragen wird.

2. Verfahren nach Anspruch 1,
bei dem zumindest eine äußere Wand (10) des Bauteils (1, 120, 130) abgetragen wird.

3. Verfahren nach Anspruch 1,
bei dem nur eine Wand (10) des Bauteils (1, 120, 130) abgetragen wird.

4. Verfahren nach einem oder beiden der Ansprüche 1 oder 2,
bei dem auch ein Teil eines Bodens (7) zwischen der Wand (10) mit abgetragen wird.

5. Verfahren nach einem oder mehreren der Ansprüche 1 bis 4,
bei dem ein Laserauftragsschweißverfahren zur Erzeugung der umlaufenden Schweißung (13) und/oder des Materialauftrags (19) verwendet wird.

6. Verfahren mit einem oder mehreren der Ansprüche 1 bis 5,
bei dem nur Material für eine äußere Wand (10) aufgetragen wird.

7. Verfahren nach einem oder mehreren der Ansprüche 1 bis 5,
bei dem Material für einen Boden (7) und eine äußere Wand (10) aufgetragen wird.

8. Verfahren nach einem oder mehreren der Ansprüche 1 bis 7,
bei dem nach vollständigem Auftrag von Material (19) zumindest der Teil (13') der umlaufenden Schweißung (13) bearbeitet wird.

9. Verfahren nach einem oder mehreren der Ansprüche 1 bis 8,
bei dem ein Laserauftragsschweißen verwendet wird.
